# FASCICULE DE BREVET EUROPEEN

(11) **EP 3 027 561 B1**
(45) Date de publication et mention de la délivrance du brevet: **16.12.2020**
(21) Numéro de dépôt: 14744129.9
(22) Date de dépôt: 28.07.2014
(51) Int. Cl.: C01G 53/00, H01M 4/505, H01M 4/525, H01M 10/0525, H01M 10/052

(54) **MATERIAUX D'ELECTRODE POSITIVE DE BATTERIE AU LITHIUM A BASE D'UN OXYDE LAMELLAIRE SURLITHIE**
POSITIVELEKTRODENMATERIALIEN FÜR EINE LITHIUMBATTERIE MIT EINER BASIS AUS EINEM ÜBERLITHIERTEN GESCHICHTETEN OXID
POSITIVE ELECTRODE MATERIALS FOR A LITHIUM BATTERY WITH A BASE OF AN OVERLITHIATED LAYERED OXIDE

(30) Priorité: 29.07.2013 FR 1357477
(43) Date de publication de la demande: 08.06.2016
(73) Titulaire: Commissariat à l'Énergie Atomique et aux Énergies Alternatives, 75015 Paris (FR)
(72) Inventeur: PERALTA, David, F-38000 Grenoble (FR); FABRE, Frédéric, F-38600 Fontaine (FR); FEYDI, Pierre, F-87100 Limoges (FR); MARTINET, Sébastien, F-38210 St Quentin Sur Isere (FR); CHAPUIS, Marlène, F-38120 Saint Egreve (FR); SIMONIN, Loïc, F-38470 Vinay (FR)
(74) Mandataire: Brevalex
(86) Numéro de dépôt international: PCT/EP2014/066203
(87) Numéro de publication internationale: WO 2015/014807

(56) Documents cités:
- JP-A- 2003 089 526
- US-A1- 2009 226 811
- US-A1- 2013 146 808
- CHIH-CHIEH WANG ET AL: "Effect of Synthesis Conditions on the First Charge and Reversible Capacities of Lithium-Rich Layered Oxide Cathodes", CHEMISTRY OF MATERIALS, vol. 25, no. 15, 5 juillet 2013 (2013-07-05), pages 3267-3275, XP055104724, ISSN: 0897-4756, DOI: 10.1021/cm402181f
- WEN-CHIN CHEN ET AL: "Study on the synthesis-microstructure-performance relationship of layered Li-excess nickel-manganese oxide as a Li-ion battery cathode prepared by high-temperature calcination", JOURNAL OF MATERIALS CHEMISTRY A, vol. 1, no. 36, 10 juillet 2013 (2013-07-10), page 10847, XP055104889, ISSN: 2050-7488, DOI: 10.1039/c3ta11716b
- JIHYUN HONG ET AL: "Structural evolution of layered Li1.2Ni0.2Mn0.6O2 upon electrochemical cycling in a Li rechargeable battery", JOURNAL OF MATERIALS CHEMISTRY, vol. 20, no. 45, 4 octobre 2010 (2010-10-04), page 10179, XP055104591, ISSN: 0959-9428, DOI: 10.1039/c0jm01971b
- Zonghai Chen ET AL: "Advanced cathode materials for lithium-ion batteries", M R S Bulletin, vol. 36, no. 07, 1 July 2011 (2011-07-01), pages 498-505, XP055287690, US ISSN: 0883-7694, DOI: 10.1557/mrs.2011.155
- FERGUS ET AL: "Recent developments in cathode materials for lithium ion batteries", JOURNAL OF POWER SOURCES, ELSEVIER SA, CH, vol. 195, no. 4, 15 February 2010 (2010-02-15), pages 939-954, XP026693512, ISSN: 0378-7753, DOI: 10.1016/J.JPOWSOUR.2009.08.089 [retrieved on 2009-09-06]

## Description

### DOMAINE TECHNIQUE

La présente invention a trait à un procédé de préparation de matériaux d'électrode positive de batterie lithium-ion à base d'oxyde lamellaire surlithié ainsi qu'à un procédé de préparation de ces matériaux.

Les batteries lithium-ion sont particulièrement intéressantes pour les domaines où l'autonomie est un critère primordial, tels que cela est le cas des domaines de l'informatique, de la vidéo, de la téléphonie mobile, des transports tels que les véhicules électriques, les véhicules hybrides, ou encore des domaines médicaux, spatiaux ou de la microélectronique.

D'un point de vue fonctionnel, les batteries lithium-ion reposent sur le principe de l'intercalation-désintercalation du lithium au sein des matériaux constitutifs des électrodes des cellules électrochimiques de la batterie.

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.

Dans les batteries lithium-ion, l'élément le plus critique et le plus limitatif s'avère être l'électrode positive et, plus spécifiquement, le matériau actif de l'électrode positive. En effet, ce sont les propriétés du matériau actif de l'électrode positive qui détermineront la densité d'énergie, la tension et la durée de vie de la batterie.

Parmi les matériaux candidats pour la réalisation d'électrode positive, la famille des oxydes lamellaires et plus spécifiquement, la famille des oxydes lamellaires surlithiés semble particulièrement prometteuse. D'une manière générale, les formulations utilisées comprennent classiquement le nickel, le manganèse et le cobalt. Le cobalt présente plusieurs avantages, dont notamment celui d'augmenter la conductivité du matériau et d'augmenter la densité tapée. Mais il présente également des inconvénients non négligeables, tels que son prix et une instabilité, qui peut être à l'origine d'une dégradation du matériau le comprenant. On se retrouve ainsi face à une situation de blocage où la présence d'un dopant tel que le cobalt présente des risques en termes de sécurité mais où son absence conduit à la formation de matériaux présentant une faible densité (notamment, une faible densité tapée) et des performances électriques en-deçà de celles obtenues avec des matériaux comprenant un tel dopant, notamment en termes de cyclabilité. Pour pallier ces inconvénients, il peut être nécessaire d'adjoindre au matériau une couche protectrice ou une couche de dopant, ce qui contribue à compliquer la fabrication du matériau.

J.Mater. Chem., 2010, 20, 10179-10186 décrit un oxyde lamellaire de formule Li_{1,2}Ni_{0,2}Mn_{0,6}O₂ comme matériau de cathode pour batterie au lithium, cet oxyde lamellaire étant préparé par un procédé comprenant les étapes suivantes :
- une étape de préparation d'un oxyde mixte (Ni_{0,25}Mn_{0,75}CO₃) obtenu par coprécipitation ;
- une étape de réaction entre l'oxyde mixte susmentionné et du carbonate de lithium.

De manière plus spécifique, l'oxyde mixte est préparé par les opérations :
1°) Ajout d'une solution aqueuse de NiSO₄ et de MnSO₄ à une solution aqueuse d'hydrogénocarbonate de sodium sous agitation constante à 250 tours/min à 50°C ;
2°) Maintien du pH à une valeur de 8 par ajout d'hydroxyde d'ammonium ;
3°) Mûrissement de la solution obtenue pendant 24 heures ; et
4°) Récupération du précipité par filtration, lavage avec de l'eau désionisée et séchage à 120°C.

Au regard de ce qui existe, les auteurs de la présente invention se sont fixés pour objectif de mettre au point un procédé de préparation de nouveaux matériaux d'électrode positive (pouvant être dénommé également matériau actif) ne présentant pas les inconvénients de l'art antérieur et, en particulier, présentant les avantages suivants :
- une excellente stabilité au cyclage, que ce soit en régime de décharge lent (par exemple, C/10) et/ou en régime de décharge rapide (par exemple, C/2) ;
- une capacité spécifique massique importante (par exemple, pouvant être de l'ordre de 250 mAh/g) ;
- une densité tapée importante, par exemple, supérieure ou égale à 1,6 g/cm³.

### EXPOSÉ DE L'INVENTION

Les auteurs de la présente invention ont découvert un procédé de préparation de matériaux d'électrode positive spécifiques et présentant un domaine de surface spécifique choisi de manière motivée, moyennant quoi ces matériaux permettent d'accéder favorablement aux avantages mentionnés ci-dessus.

Ainsi, l'invention s'inscrit dans le domaine des matériaux d'électrode positive de batterie lithium-ion comprenant une poudre d'oxyde lamellaire surlithié répondant à la formule (I) suivante :

Li₁₊ₓ(MnₐNi_{b}M_{c})₁₋ₓO₂ (I)

dans laquelle :
*x est compris dans une gamme allant de 0,1 à 0,26 ;
*a+b+c=1 avec la condition que a et b soient différents de 0 ;
*lorsque c est différent 0, M est un élément de transition autre que le cobalt, et
ladite poudre présentant une surface spécifique allant de 1,8 à 6 m²/g et, de préférence, présentant une densité tapée supérieure ou égale à 1,6 g/cm³.

Les surfaces spécifiques susmentionnées sont déterminées par adsorption d'azote à 77 Kelvins avec un appareil de la marque Micrometrics modèle Tristar II.

Plus spécifiquement, la détermination des surfaces spécifiques peut être décrite selon les trois étapes suivantes :
- une première étape consistant à introduire environ un gramme du matériau à analyser, sous forme de poudre, dans l'analyseur suivi d'une mise à dégazer durant 4 heures à 180°C sous vide ;
- une deuxième étape consistant à injecter de l'azote dans l'analyseur, afin de pouvoir enregistrer l'isotherme d'adsorption d'azote du matériau à 77 Kelvins ; et
- une troisième étape consistant à retraiter l'isotherme ainsi obtenu selon le modèle de Brunauer-Emmett-Teller, afin de pouvoir extraire une surface spécifique appelée surface spécifique BET.

L'extraction de la surface spécifique BET doit se faire dans une gamme de pressions partielles d'azote bien définie. Dans le cas ici présent, la régression permettant d'extraire la surface spécifique est faite sur cinq valeurs de pression partielle, qui sont les suivantes : 0,05 ; 0,10 ; 0,15 ; 0,20 et 0,25.

Concernant la densité tapée, on précise qu'il s'agit de la densité obtenue après avoir tapé une masse déterminée de poudre placée dans une burette, cette densité tapée étant, plus spécifiquement, déterminée selon le protocole qui suit.

La mesure de densité tapée est effectuée sur un appareil spécifique de marque « Quantachrome Instrument » modèle « Autotap-tap density Analyser ». Environ 5 grammes de poudre sont pesés précisément dans une burette graduée de 10 ml. La burette est alors placée sur l'appareil qui va taper jusqu'à ce que le volume de poudre n'évolue plus (environ 30000 coups). La densité tapée est alors obtenue en utilisant l'équation suivante : *ϕt= mV*
dans laquelle
ϕt : masse volumique après tassement (g/cm3)
m : masse de poudre (en g)
V : volume après tassement (en cm³).

En déterminant une gamme de surface spécifique donnée telle que définie ci-dessus, il est ainsi possible de se passer de l'utilisation du cobalt, tout en présentant les avantages susmentionnés. Qui plus est, le matériau résultant présente une capacité spécifique massique immédiatement stable ou, à tout le moins, qui se stabilise lors des premiers cycles de charge-décharge.

Sur la base de cette invention, les auteurs de la présente invention ont pu aboutir aux constats suivants :
- avec un matériau similaire du point de vue chimique mais avec une surface spécifique inférieure à la gamme susmentionnée, le matériau présente une densité tapée élevée, une capacité spécifique massique qui augmente au cours des premiers cycles de charge-décharge mais en restant à une valeur relativement faible ;
- avec un matériau similaire du point de vue chimique mais avec une surface spécifique supérieure à la gamme susmentionnée, le matériau présente une capacité spécifique massique, qui chute substantiellement au cours du nombre des cycles charge-décharge.

Les gammes de surfaces retenues pour les matériaux objets du procédé de l'invention relèvent ainsi d'un choix motivé, car elle permet l'accession à des matériaux présentant :
- une capacité spécifique massique immédiatement stable ou, à tout le moins, qui se stabilisera au cours des premiers cycles de charge-décharge ;
- une densité tapée élevée ; et
- une capacité spécifique massique élevée (par exemple, de l'ordre de 250 mAh/g).

Comme mentionné ci-dessus, l'oxyde lamellaire surlithié répond à la formule (I) suivante :

Li₁₊ₓ(MnₐNi_{b}M_{c})₁₋ₓO₂ (I)

dans laquelle :
*x est compris dans une gamme allant de 0,1 à 0,26 ;
*a+b+c=1 avec la condition que a et b soient différents de 0 ;
*lorsque c est différent 0, M est un élément de transition autre que le cobalt.

Lorsqu'il est présent (c'est-à-dire lorsque c est différent de 0), M peut être choisi parmi Al, Fe, Ti, Cr, V, Cu, Mg, Zn, Na, K, Ca et Sc. Plus spécifiquement, l'oxyde lamellaire surlithié répond à la formule (II) suivante :

Li₁₊ₓ(MnₐNi_{b})₁₋ₓO₂ (II)

avec a, b et x étant tels que définis ci-dessus.

Quant aux indices, a et b, ils répondront dans ce cas de figure à la relation a+b=1 avec toujours la condition que a et b soient différents de 0. Outre cette relation et celle liée à l'indice x, il s'entend, de façon générale, que les valeurs de a, b, c (le cas échéant) et x seront choisis de sorte à ce que le composé de formule (I) soit électriquement neutre.

Un oxyde spécifique conforme à la définition des oxydes de formule (II) susmentionnée est l'oxyde de formule (III) suivante :

Li_{1,2}Ni_{0,2}Mn_{0,6}O₂ (III)

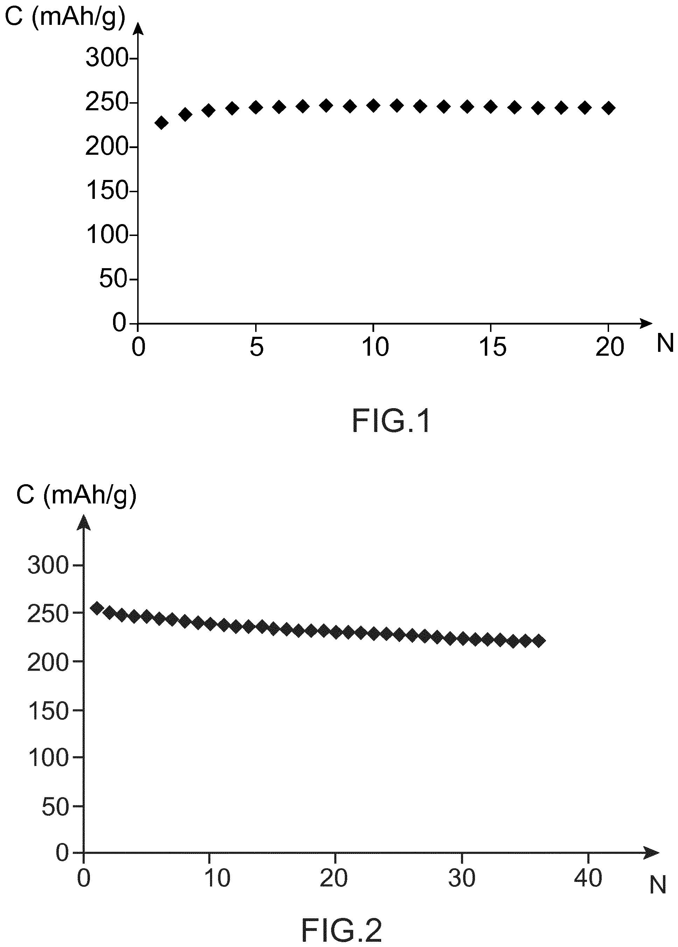

Selon un mode particulier de réalisation de l'invention, l'oxyde entrant dans la composition des matériaux objets du procédé de l'invention peut présenter une surface spécifique allant de 1,8 m²/g à 2,8 m²/g et, avantageusement, une densité tapée supérieure à 1,6 g/cm³. Les auteurs de la présente invention ont mis en évidence qu'un matériau comprenant un tel composé est particulièrement adapté pour une utilisation dans une batterie lithium-ion soumise à un cyclage lent (à savoir une batterie soumise à un régime lent de cycles de charge-décharge, par exemple, C/10). En effet, dans de telles conditions, il a pu être déterminé que l'oxyde lamellaire présente une densité tapée supérieure à 1,6 g/cm³, une capacité spécifique massique pouvant aller jusqu'à 250 mAh/g et une excellente stabilité en cyclage. Avec ce matériau, il est possible, comme l'atteste la figure 1 jointe en annexe représentant l'évolution de la capacité spécifique C (en mAh/g) du matériau en fonction du nombre de cycles N, d'obtenir une forme de courbe originale, à savoir une courbe croissante au cours des premiers cycles et qui finit par se stabiliser autour d'une valeur de capacité de 250 mAh/g.

Pour une valeur de surface spécifique qui excéderait 2,8 m²/g, le matériau présente une mauvaise tenue au cyclage à un régime de charge et de décharge lent C/10 comme l'atteste la figure 2, jointe en annexe représentant l'évolution de la capacité spécifique C (en mAh/g) d'un matériau de surface spécifique supérieure à 2,8 m²/g en fonction du nombre de cycles N, cette figure illustrant une courbe décroissante au fur et à mesure que le nombre de cycles augmente.

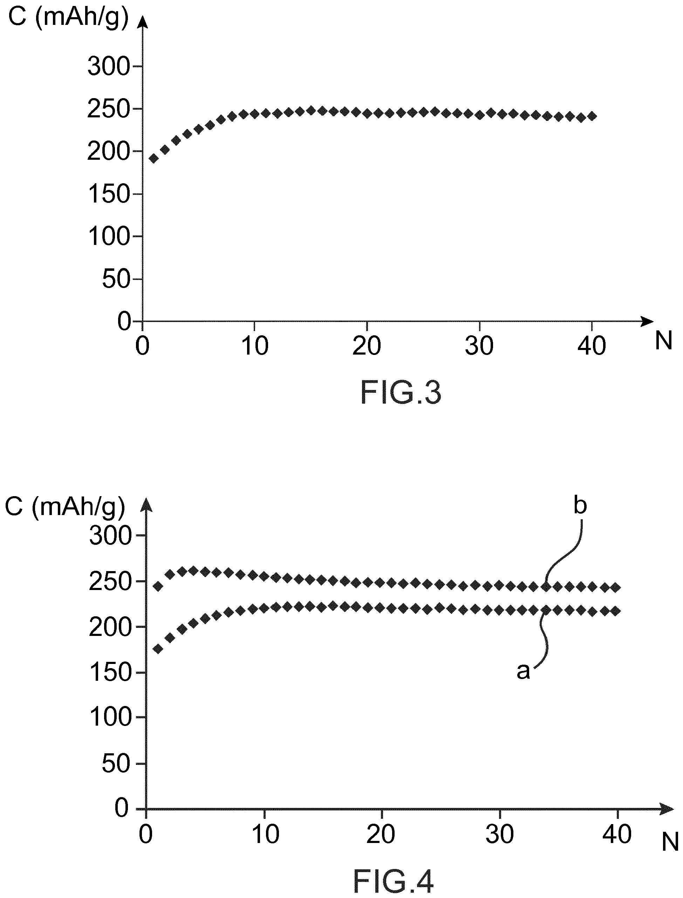

Selon un autre mode particulier de réalisation de l'invention, le composé entrant dans la composition des matériaux objets du procédé de l'invention peut présenter une surface spécifique allant de 2,3 m²/g à 6 m²/g et, avantageusement, une densité tapée supérieure à 1,6 g/cm³. Les auteurs de la présente invention ont mis en évidence qu'un matériau comprenant un tel composé est particulièrement adapté pour une utilisation dans une batterie lithium-ion soumise à un cyclage rapide (à savoir, une batterie soumise à un régime rapide de cycles de charge-décharge, par exemple, C/2). En effet, dans de telles conditions, il a pu être déterminé que l'oxyde lamellaire présente une capacité spécifique massique pouvant aller jusqu'à 250 mAh/g et une excellent stabilité au cyclage. Avec ce matériau, il est possible, comme l'atteste la figure 3 jointe en annexe représentant l'évolution de la capacité spécifique C (en mAh/g) du matériau en fonction du nombre de cycles N, d'obtenir une forme de courbe originale, à savoir une courbe croissante au cour des premiers cycles et qui finit par se stabiliser autour d'une valeur de capacité de 250 mAh/g.

Enfin, selon encore un autre mode de réalisation, le composé entrant dans la composition des matériaux objets du procédé de l'invention peut présenter une surface spécifique allant de 2,3 m²/g à 2,8 m²/g. Les auteurs de la présente invention ont mis en évidence qu'un matériau comprenant un tel composé est particulièrement adapté pour une utilisation dans une batterie lithium-ion pouvant être soumise à la fois à un cyclage rapide (à savoir, une batterie soumise à un régime rapide de cycles de charge-décharge, par exemple, C/2) et un cyclage lent (à savoir, une batterie soumise à un régime lent de cycles de charge-décharge, par exemple, C/10). En effet, dans de telles conditions, il a pu être déterminé que l'oxyde lamellaire présente à la fois une densité tapée élevée, une excellente tenue au cyclage et une capacité spécifique massique en décharge élevée aussi bien en régime de cyclage rapide (autour de 220 mAh/g) comme en régime de cyclage lent (autour de 250 mAh/g).

Avec ce matériau, il est possible, comme l'atteste la figure 4 jointe en annexe représentant l'évolution de la capacité spécifique C (en mAh/g) du matériau en fonction du nombre de cycles N, d'obtenir une forme de courbe originale, à savoir une courbe croissante au cour des premiers cycles et qui finit par se stabiliser autour d'une valeur de capacité de 220 mAh/g (courbe a) pour le régime de cyclage rapide) et autour d'une valeur de capacité de 250 mAh/g (courbe b) pour le régime de cyclage lent).

L'oxyde lamellaire surlithié doit être préparé dans des conditions opératoires permettant un parfait contrôle de la surface spécifique et de la morphologie de la poudre obtenue.

Pour ce faire, les auteurs de la présente invention ont mis au point un procédé de préparation d'une poudre d'un oxyde lamellaire surlithié de formule (II) suivante :

Li₁₊ₓ(MnₐNi_{b})₁₋ₓO₂ (II)

dans laquelle :
*x est compris dans une gamme allant de 0,1 à 0,26 ;
*a+b=1 avec la condition que a et b soient différents de 0 ;
ladite poudre présentant une surface spécifique allant de 1,8 à 6,0 m²/g et, de préférence, présentant une densité tapée supérieure ou égale à 1,6 g/cm³, ledit procédé comprenant les étapes suivantes :
   a) une étape de synthèse d'un carbonate mixte comprenant l'élément Mn, Ni et éventuellement M ;
   b) une étape de réaction du carbonate mixte obtenu à l'étape a) avec un carbonate de lithium, moyennant quoi il se forme l'oxyde lamellaire surlithié de formule (II) susmentionnée,
les conditions opératoires de synthèse du carbonate mixte étant fixées de sorte à obtenir une surface spécifique pour l'oxyde lamellaire présentant une valeur tombant sous le coup de la définition de la gamme mentionnée ci-dessus.

Dans le cas où la synthèse du carbonate mixte ne permet pas d'obtenir un oxyde lamellaire présentant une valeur tombant sous le coup de la définition de la gamme mentionnée ci-dessus, il est possible de modifier la température de calcination du mélange carbonate de lithium/carbonate mixte dans une plage allant de 800 à 1000°C. La modification de la température de calcination peut modifier la surface spécifique du produit final.

L'homme du métier pourra déterminer ces conditions opératoires en élaborant préalablement des plans d'expériences, desquels il isolera des conditions opératoires précises en vue d'obtenir une valeur donnée de surface spécifique tombant dans la gamme susmentionnée.

Plus spécifiquement, l'étape de synthèse d'un carbonate mixte consiste à coprécipiter sous agitation, en milieu basique (par exemple, un milieu comprenant de l'ammoniaque) une solution comprenant un sulfate de manganèse, un sulfate de nickel et, éventuellement, un sulfate de M et un carbonate de sel alcalin (par exemple, du carbonate de sodium).

Encore plus spécifiquement, l'étape de synthèse d'un carbonate mixte comprend les opérations suivantes :
- une opération d'injection, dans un réacteur (par exemple, un réacteur du type CSTR) comprenant de l'eau, d'une solution comprenant un sulfate de nickel, un sulfate de manganèse et éventuellement un sulfate de M (dite ci-dessous solution de sulfates) selon un débit prédéterminé, une vitesse d'agitation prédéterminée et à un pH prédéterminé ;
- une opération de maintien de l'agitation du précipité formé pendant une durée appropriée pour la formation complète du carbonate mixte ;
- une opération d'isolement du précipité suivie d'une opération de séchage pour former une poudre du carbonate mixte.

Les conditions opératoires particulièrement influentes sont le pH, le débit et la vitesse d'agitation susmentionnés (ces conditions étant mentionnées ci-dessus par les expressions « pH prédéterminée, « débit prédéterminé » et « vitesse d'agitation prédéterminée »).

Ces conditions opératoires sont fixées de la manière suivante :
- un pH allant de 7,0 à 8,0, de préférence, 7,5 ;
- un débit d'injection de sulfate de sorte à ce que le rapport (débit de solution de sulfates/volume d'eau) dans le réacteur, est de 0,15 mol.h⁻¹.l⁻¹ à 6,8 mol.h⁻¹.l⁻¹, de préférence de 1,30 mol.h⁻¹.l⁻¹ à 6,8 mol.h⁻¹.l⁻¹ ;
- une vitesse d'agitation prédéterminée choisie de sorte à fournir une puissance dissipée par unité de volume allant de 2,0 W/m³ à 253,2 W/m³, de préférence de 2,0 W/m³ à 21 W/m³.

Qui plus est, l'opération d'injection et l'opération de maintien peuvent être réalisées avec la même vitesse d'agitation et, avantageusement à une température allant de 50 à 70°C.

L'opération de maintien de l'agitation peut être réalisée pendant une durée allant de 6 à 10 heures.

Enfin, la concentration de la solution comprenant les sulfates peut aller de 0,8 à 3 M.

Une fois le carbonate mixte réalisé, celui-ci est mis à réagir avec un carbonate de lithium dans des conditions suffisantes pour l'obtention d'un oxyde lamellaire surlithié de formule (I) susmentionnée. En particulier, ces conditions sont classiquement une température associée à une durée appropriée nécessaires à l'obtention de l'oxyde lamellaire surlithié. Ces conditions peuvent être déterminées par l'homme du métier par le biais d'essais préalables, l'obtention du produit voulu (ici, l'oxyde lamellaire surlithié) pouvant être détectée par diffraction aux rayons X.

Comme son nom l'indique, le matériau objet du procédé de l'invention est un matériau d'électrode positive pour batterie lithium-ion. Il est donc tout naturellement destiné à entrer dans la constitution d'une batterie au lithium comprenant au moins une cellule électrochimique comprenant un électrolyte disposé entre une électrode positive et une électrode négative, ladite électrode positive comprenant un tel matériau.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

L'électrode négative peut être, par exemple, du lithium sous forme métallique, ou bien peut être un matériau apte à insérer et désinsérer du lithium, tel qu'un matériau carboné comme du graphite, un matériau oxyde tel que Li₄Ti₅O₁₂ ou un composé apte à former alliage avec du lithium, tel que du silicium ou de l'étain.

L'électrode positive, quant à elle, peut comprendre, outre le matériau obtenu conformément au procédé de l'invention, un liant et un additif conducteur électronique, tel que du carbone.

L'électrolyte, quant à lui, peut comprendre, en général, un sel de lithium, par exemple, choisi parmi LiClO₄, LiAsF₆, LiPF₆, LiBF₄, LiRfSO₃, LiCH₃SO₃, LiN(RfSO₂)₂, Rf étant choisi F ou un groupe perfluoroalkyle comportant de 1 à 8 atomes de carbone, du trifluorométhanesulfonylimide de lithium (connu sous l'abréviation LiTfSI), du bis(oxalato)borate de lithium (connu sous l'abréviation LiBOB), du bis(perfluoréthylsulfonyl)imide de lithium (également connu sous l'abréviation LiBETI), du fluoroalkylphosphate de lithium (connu sous l'abréviation LiFAP).

Le sel de lithium est, de préférence, dissous dans un solvant polaire aprotique.

En outre, l'électrolyte peut être amené à imbiber un élément séparateur disposé entre les deux électrodes de l'accumulateur.

Dans le cas d'un accumulateur au lithium comprenant un électrolyte polymère, le sel de lithium n'est pas dissous dans un solvant organique, mais dans un composite polymère solide, tel que le polyoxyde d'éthylène (connu sous l'abréviation POE), le polyacrylonitrile (connu sous l'abréviation PAN), le polyméthacrylate de méthyle (connu sou l'abréviation PMMA), le polyfluorure de vinylidène (connu sous l'abréviation PVDF), le polychlorure de vinylidène (connu sous l'abréviation PVC) ou un de leurs dérivés.

D'autres caractéristiques apparaîtront mieux à la lecture du complément de description qui suit, lequel se rapporte à des exemples de fabrication de matériaux obtenus conformément au procédé de l'invention.

Bien entendu, les exemples qui suivent ne sont donnés qu'à titre d'illustration de l'objet de l'invention et ne constituent, en aucun cas, une limitation de cet objet.

### BREVE DESCRIPTION DES FIGURES

La figure 1 est un graphique représentant l'évolution de la capacité spécifique C (en mAh/g) d'un matériau obtenu conformément au procédé de l'invention en fonction du nombre de cycles N en régime de décharge lent.
La figure 2 est un graphique représentant l'évolution de la capacité spécifique C (en mAh/g) d'un matériau de surface spécifique supérieure à 2,8 m²/g (matériau non conforme à l'invention) en fonction du nombre de cycles N en régime de décharge lent.
La figure 3 est un graphique représentant l'évolution de la capacité spécifique C (en mAh/g) d'un matériau obtenu conformément au procédé de l'invention en fonction du nombre de cycles N en régime de décharge rapide.
La figure 4 est un graphique représentant l'évolution de la capacité spécifique C (en mAh/g) d'un matériau obtenu conformément au procédé de l'invention en fonction du nombre de cycles N, ledit matériau étant soumis à un régime de décharge lent (courbe b) ou un régime de décharge rapide (courbe a).
La figure 5 est un graphique représentant l'évolution de la capacité spécifique C (exprimée en mAh/g) du matériau de l'exemple 1 en fonction du nombre de cycles N en régime de décharge rapide (courbe b) ou en régime de décharge lent (courbe a).
La figure 6 est un graphique représentant l'évolution de la capacité spécifique C (exprimée en mAh/g) du matériau de l'exemple 2 en fonction du nombre de cycles N en régime de décharge rapide (courbe b) ou en régime de décharge lent (courbe a).
La figure 7 est un graphique représentant l'évolution de la capacité spécifique C (exprimée en mAh/g) du matériau de l'exemple 2 en fonction du nombre de cycles N en régime de décharge rapide (courbe b) ou en régime de décharge lent (courbe a).
La figure 8 est un graphique représentant l'évolution de la capacité spécifique C (exprimée en mAh/g) du matériau de l'exemple 2 en fonction du nombre de cycles N en régime de décharge rapide (courbe b) ou en régime de décharge lent (courbe a).
La figure 9 est un graphique représentant l'évolution de la capacité spécifique C (exprimée en mAh/g) du matériau de l'exemple 3 en fonction du nombre de cycles N en régime de décharge rapide (courbe b) ou en régime de décharge lent (courbe a).
La figure 10 est un graphique représentant l'évolution de la capacité spécifique C (exprimée en mAh/g) du matériau de l'exemple 3 en fonction du nombre de cycles N en régime de décharge rapide (courbe b) ou en régime de décharge lent (courbe a).

### EXPOSÉ DÉTAILLÉ DE MODES DE RÉALISATION PARTICULIERS

### EXEMPLE 1

Cet exemple illustre la synthèse d'un oxyde lamellaire lithié de formule Li_{1,2}Ni_{0,2}Mn_{0,6}O₂ présentant une surface spécifique de 1,8 m²/g, ladite synthèse comprenant, dans un premier temps, la préparation d'un carbonate mixte de nickel et de manganèse puis la réaction de ce carbonate mixte avec un carbonate de lithium.

Dans un réacteur de type CSTR d'une contenance de 800 mL, on introduit 500 mL d'eau et on la chauffe à 60°C. Durant toute la préparation du carbonate mixte, l'agitation du mélange est maintenue de sorte à obtenir une puissance dissipée de 54,7 W/m³. Une solution de sulfate de nickel et de sulfate de manganèse (selon un ratio molaire 1/3 pour une concentration de 2M) est injectée en continu dans le réacteur de sorte à ce que le ratio débit d'injection de la solution de sulfates/volume d'eau du réacteur soit de de 0,15 mol.h⁻¹.l⁻¹. Le pH du réacteur est régulé à 7,5 en ajoutant une solution de carbonate de sodium 2M et une solution d'ammoniaque 0,4 M. L'injection est maintenue pendant 120 minutes puis les pompes d'injection sont coupées. Au cours de l'injection, il se forme un précipité. A l'issue de l'injection, ce précipité est laissé dans le solvant pendant 6 heures à la même température et à la même agitation. A l'issue de cette durée de 6 heures, le précipité est séparé de la phase liquide par centrifugation et/ou filtration puis est lavé abondamment avec de l'eau chaude à 70°C. Le carbonate mixte obtenu est alors mis à sécher dans une étuve sous air à 120°C. Le carbonate mixte ainsi formé est alors mélangé de façon intime avec un carbonate de lithium. Le mélange résultant est ensuite calciné à une température à une température de 900°C pendant 24 heures. L'oxyde obtenu est un oxyde lamellaire de formule Li_{1,2}Ni_{0,2}Mn_{0,6}O₂ se présentant sous forme d'une poudre.

La poudre obtenue est analysée par diffraction aux rayons X (DRX) et est soumise à des mesures de sorte à estimer la densité tapée, la surface spécifique et son comportement électrochimique pour un régime C/10 (qui correspond à un régime de décharge lent) et C/2 (qui correspond à un régime de décharge rapide).

Les surfaces spécifiques susmentionnées sont déterminées par adsorption d'azote à 77 Kelvins avec un appareil de la marque Micrometrics modèle Tristar II.

Plus spécifiquement, la détermination des surfaces spécifiques peut être décrite selon les trois étapes suivantes :
- une première étape consistant à introduire environ un gramme du matériau à analyser, sous forme de poudre, dans l'analyseur suivi d'une mise à dégazer durant 4 heures à 180°C sous vide ;
- une deuxième étape consistant à injecter de l'azote dans l'analyseur, afin de pouvoir enregistrer l'isotherme d'adsorption d'azote du matériau à 77 Kelvins ; et
- une troisième étape consistant à retraiter l'isotherme ainsi obtenu selon le modèle de Brunauer-Emmett-Teller, afin de pouvoir extraire une surface spécifique appelée surface spécifique BET.

L'extraction de la surface spécifique BET doit se faire dans une gamme de pressions partielles d'azote bien définie. Dans le cas ici présent, la régression permettant d'extraire la surface spécifique est faite sur cinq valeurs de pression partielle, qui sont les suivantes : 0,05 ; 0,10 ; 0,15 ; 0,20 et 0,25.

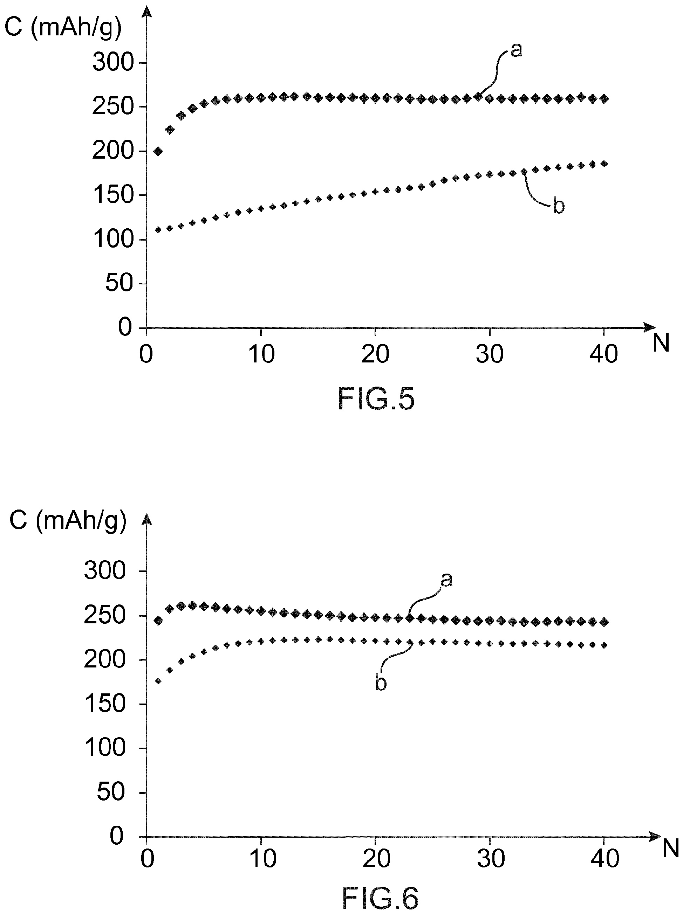

La surface spécifique de l'oxyde est de 1,8 m²/g, tandis que sa densité tapée est de 1,6 g/cm³, ce qui permet d'obtenir de très bonnes performances en termes de cyclabilité en régime de décharge lent (C/10) comme l'atteste la courbe a) (pour le régime de décharge lent) de la figure 5 représentant l'évolution de la capacité spécifique de l'oxyde (exprimée en mAh/g) en fonction du nombre de cycles.

En terme de capacités, la valeur de la surface spécifique rentre dans la gamme des valeurs définies pour un cyclage lent, par conséquent la capacité obtenue à un régime de C/10 est élevée (235 mAh/g). En ce qui concerne le régime à C/2, la valeur de surface spécifique est inférieure à la gamme des valeurs définies pour un cyclage rapide, par conséquent la capacité obtenue pour un régime C/2 est faible (150 mAh/g) comme l'atteste la courbe b) de la figure 5.

### EXEMPLE 2

Cet exemple illustre la synthèse d'un oxyde lamellaire lithié de formule Li_{1,2}Ni_{0,2}Mn_{0,6}O₂ comprenant, dans un premier temps, la préparation d'un carbonate mixte de nickel et de manganèse puis la réaction de ce carbonate mixte avec un carbonate de lithium. L'exemple mettra en évidence qu'il est possible d'ajuster la surface spécifique d'un oxyde lamellaire en modifiant la température de calcination du mélange de carbonate de lithium et de précurseur mixte.

Dans un réacteur de type CSTR d'une contenance de 500 mL, on introduit 500 mL d'eau et on la chauffe à 50°C. Durant toute la préparation du carbonate mixte, l'agitation du mélange est maintenue de manière à avoir une puissance dissipée de 2,03 W/m³. Une solution de sulfate de nickel et de sulfate de manganèse (selon un ratio molaire 1/3 pour une concentration de 2M) est injectée en continu dans le réacteur avec un débit de sorte à ce que le ratio débit d'injection de la solution/volume d'eau du réacteur soit de 3,3 mol.h⁻¹.l⁻¹. Le pH du réacteur est régulé à 7,5 en ajoutant une solution de carbonate de sodium 2M et une solution d'ammoniaque 0,4 M. L'injection est maintenue pendant 5 minutes puis les pompes d'injection sont coupées. Au cours de l'injection, il se forme un précipité. A l'issue de l'injection, ce précipité est laissé dans le solvant pendant 8 heures à la même température et à la même agitation. A l'issue de cette durée de 8 heures, le précipité est séparé de la phase liquide par centrifugation et/ou filtration puis est lavé abondamment avec de l'eau chaude à 70°C. Le carbonate mixte ainsi formé est alors mélangé de façon intime avec un carbonate de lithium. Le mélange résultant est ensuite calciné à différentes températures (850°C, 875°C et 900°C pendant 24 heures). Pour toutes les trois températures de calcination, l'oxyde obtenu est un oxyde lamellaire de formule Li_{1,2}Ni_{0,2}Mn_{0,6}O₂ se présentant sous forme d'une poudre. Les oxydes obtenus présentent des surfaces spécifiques de 1,9 m²/g, 2,7 m²/g et 4,9 m²/g respectivement pour les températures de calcination de 900°C, 875°C et 850°C.

Les poudres obtenues sont analysées par diffraction aux rayons X (DRX) et sont soumises à des mesures de sorte à estimer la densité tapée, la surface spécifique et son comportement électrochimique pour un régime C/10 (qui correspond à un régime de décharge lent) et C/2 (qui correspond à un régime de décharge rapide).

La surface spécifique est déterminée selon le protocole figurant à l'exemple 1 ci-dessus.

La surface spécifique de l'oxyde synthétisé à 875°C est de 2,7 m²/g tandis que sa densité tapée est de 1,7 g/cm³, ce qui permet d'obtenir de très bonnes performances en régime de décharge rapide (C/2) et en régime de décharge lent (C/10) tant en termes de cyclabilité que de capacité spécifique comme l'attestent les courbes a) (régime de décharge lent) et b) (régime de décharge rapide) de la figure 6 représentant l'évolution de la capacité spécifique de l'oxyde (exprimée en mAh/g) en fonction du nombre de cycles.

Les oxydes synthétisés avec des températures de 900°C et de 850°C présentent des surfaces spécifiques respectivement de 1,9 m²/g et 4,9 m²/g et des densités tapées de 1,7 g/cm3. Ces valeurs de surfaces spécifiques étant comprises dans deux gammes différentes de surface spécifique définies dans ce rapport, les régimes d'utilisation de ces matériaux doivent être différents.

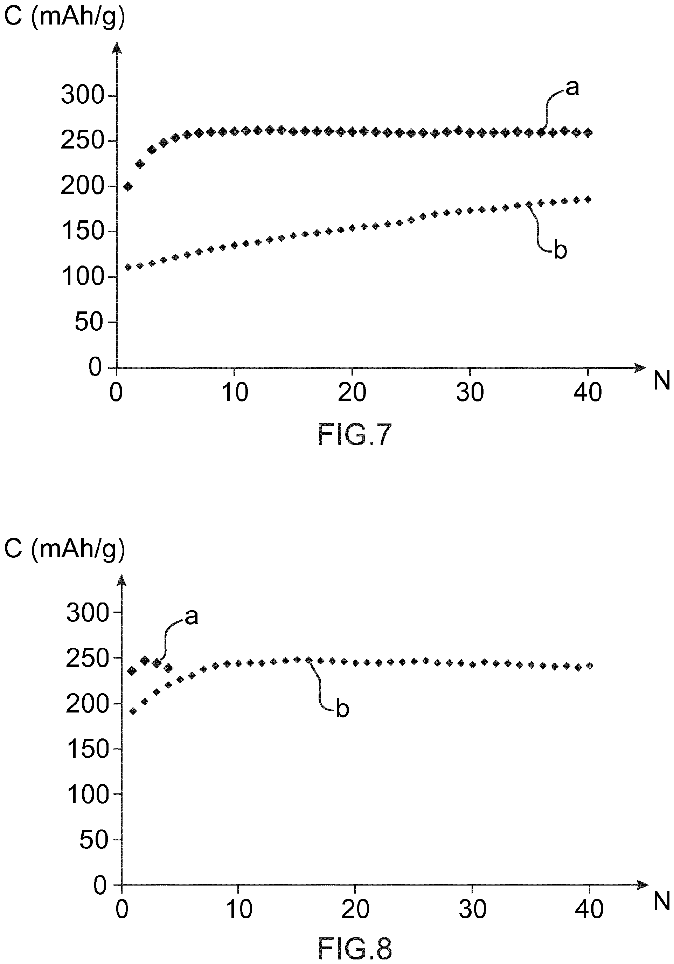

Avec le matériau calciné à 900°C, on obtient de très bonnes performances en régime de décharge lent (C/10) tant en termes de cyclabilité que de capacité spécifique comme l'atteste la courbe a) de la figure 7 représentant l'évolution de la capacité spécifique de l'oxyde (exprimée en mAh/g) en fonction du nombre de cycles. En revanche les performances du matériau à C/2 sont faibles, comme l'atteste la courbe b) de la figure 7.

L'oxyde synthétisé à une température de 850°C possède une surface spécifique de 4,9 m²/g qui rentre dans la gamme de surface spécifique que nous définissons dans ce rapport pour un régime de décharge rapide de C/2. Par conséquent, l'oxyde lamellaire synthétisé possède une mauvaise cyclabilité à un régime lent de C/10 (courbe a) de la figure 8) mais possède de très bonnes performances et une très bonne cyclabilité pour un régime rapide de C/2 (courbe b) de la figure 8) .

### EXEMPLE 3

Cet exemple illustre la synthèse d'un oxyde lamellaire lithié de formule Li_{1,2}Ni_{0,2}Mn_{0,6}O₂ comprenant, dans un premier temps, la préparation d'un carbonate mixte de nickel et de manganèse puis la réaction de ce carbonate mixte avec un carbonate de lithium. L'exemple mettra en évidence qu'il est possible d'ajuster la surface spécifique d'un oxyde lamellaire en modifiant la température de calcination du mélange de carbonate de lithium et de précurseur mixte.

Dans un réacteur de type CSTR d'une contenance de 65 L, on introduit 25 L d'eau et on la chauffe à 50°C. Durant toute la préparation du carbonate mixte, l'agitation du mélange est maintenue de manière à avoir une puissance dissipée de 20,8 W/m³. Une solution de sulfate de nickel et de sulfate de manganèse (selon un ratio molaire 1/3 pour une concentration de 0,8 M) est injectée en continu dans le réacteur avec un débit fixé de sorte à obtenir un ratio débit d'injection de la solution/volume d'eau du réacteur de 4,8 mol.h⁻¹.l⁻¹. Le pH du réacteur est régulé à 7,5 en ajoutant une solution de carbonate de sodium 2M et une solution d'ammoniaque 0,4 M. L'injection est maintenue pendant 5 minutes puis les pompes d'injection sont coupées. Au cours de l'injection, il se forme un précipité. A l'issue de l'injection, ce précipité est laissé dans le solvant pendant 8 heures à la même température et à la même agitation. A l'issue de cette durée de 8 heures, le précipité est séparé de la phase liquide et est séché par filtration sur un filtre sécheur. Le matériau est lavé abondamment avec de l'eau et est séché sur filtre sécheur après lavage. Le carbonate mixte ainsi formé est alors mélangé de façon intime avec un carbonate de lithium. Le mélange résultant est ensuite calciné à différentes températures (850°C et 900°C pendant 24 heures). Pour toutes les deux températures de calcination, l'oxyde obtenu est un oxyde lamellaire de formule Li_{1,2}Ni_{0,2}Mn_{0,6}O₂ se présentant sous forme d'une poudre. Les oxydes obtenus présentent des surfaces spécifiques de 1,9 m²/g et 2,8 m²/g respectivement pour les températures de calcination de 900°C et 850°C.

Les poudres obtenues sont analysées par diffraction aux rayons X (DRX) et sont soumises à des mesures de sorte à estimer la densité tapée, la surface spécifique et son comportement électrochimique pour un régime C/10 (qui correspond à un régime de décharge lent) et C/2 (qui correspond à un régime de décharge rapide).

La surface spécifique est déterminée selon le protocole figurant à l'exemple 1 ci-dessus.

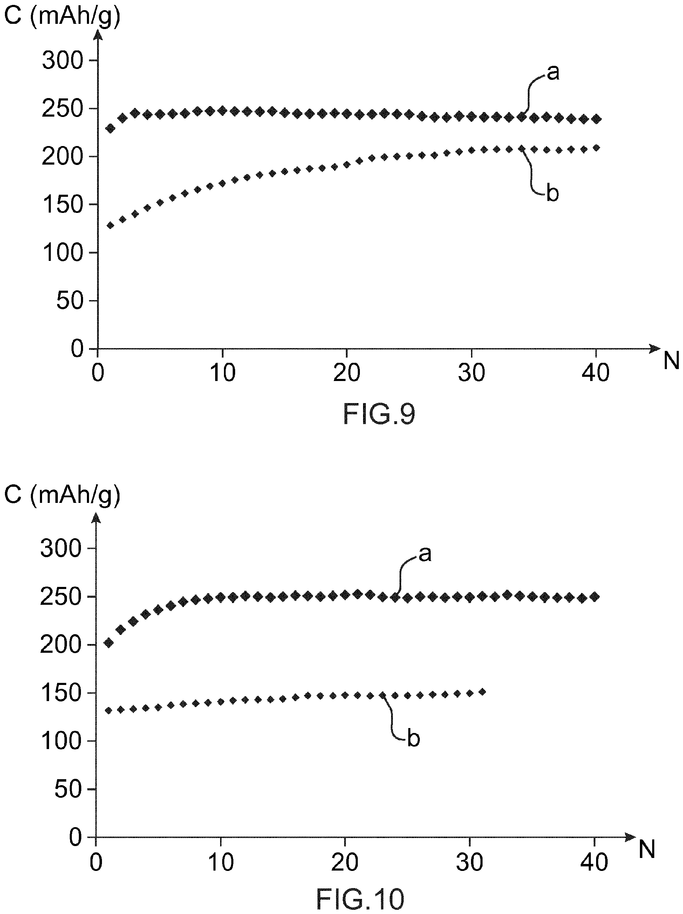

La surface spécifique de l'oxyde synthétisé à 850°C est de 2,8 m²/g tandis que sa densité tapée est de 1,7 g/cm³, ce qui permet d'obtenir de très bonnes performances en régime de décharge rapide (C/2) et en régime de décharge lent (C/10) tant en termes de cyclabilité que de capacité spécifique comme l'attestent les courbes a) (régime de décharge lent) et b) (régime de décharge rapide) de la figure 9 représentant l'évolution de la capacité spécifique de l'oxyde (exprimée en mAh/g) en fonction du nombre de cycles.

L'oxyde synthétisé avec une température de 900°C présentent une surface spécifique de 1,9 m²/g et une densité tapée de 1,7 g/cm³. La valeur de surface spécifique étant comprise dans la gamme de surface spécifique définie dans ce rapport, on obtient de très bonnes performances en régime de décharge lent (C/10) tant en termes de cyclabilité que de capacité spécifique comme l'atteste la courbe a) de la figure 10 représentant l'évolution de la capacité spécifique de l'oxyde (exprimée en mAh/g) en fonction du nombre de cycles. En revanche les performances du matériau à C/2 sont faibles, comme l'atteste la courbe b) de la figure 10.

## Revendications

1. Procédé de préparation d'une poudre d'un oxyde lamellaire surlithié de formule (II) suivante :
Li₁₊ₓ(MnₐNi_{b})₁₋ₓO₂ (II)
dans laquelle :
*x est compris dans une gamme allant de 0,1 à 0,26 ; et
*a+b=1 avec la condition que a et b soient différents de 0 ;
ladite poudre présentant une surface spécifique allant de 1,8 à 6 m²/g et présentant une densité tapée supérieure ou égale à 1,6 g/cm³, la surface spécifique et la densité tapée étant mesurées comme décrit dans la description,
caractérisé en ce ledit procédé comprend les étapes suivantes :
a) une étape de synthèse d'un carbonate mixte comprenant l'élément Mn, Ni ;
b) une étape de réaction du carbonate mixte obtenu à l'étape a) avec un carbonate de lithium par calcination à une température de 800 à 1000°C, moyennant quoi il se forme l'oxyde lamellaire surlithié de formule (II) susmentionnée,
les conditions opératoires de synthèse du carbonate mixte étant fixées de sorte à obtenir une surface spécifique pour l'oxyde lamellaire présentant une valeur tombant sous le coup de la définition de la gamme mentionnée ci-dessus,
dans lequel l'étape de synthèse d'un carbonate mixte consiste à coprécipiter sous agitation, en milieu basique, une solution comprenant un sulfate de manganèse et un sulfate de nickel et un carbonate de sel alcalin, cette étape de synthèse d'un carbonate mixte comprend les opérations suivantes :
- une opération d'injection, dans un réacteur comprenant de l'eau, d'une solution comprenant un sulfate de nickel et un sulfate de manganèse (dite solution de sulfates) selon un débit prédéterminé tel qu'un rapport (débit de solution de sulfates/volume d'eau) dans le réacteur, est de 0,15 mol.h⁻1.l⁻¹ à 6,8 mol.h⁻¹.l⁻¹, une vitesse d'agitation prédéterminée fixée de sorte à obtenir une puissance dissipée par unité de volume s'échelonnant de 2,0 W/m³ à 253,2 W/m³. et à un pH prédéterminé s'échelonnant de 7,0 à 8,0 ;
- une opération de maintien de l'agitation du précipité formé pendant une durée appropriée pour la formation complète pour le carbonate mixte ;
- une opération d'isolement du précipité suivie d'une opération de séchage pour former une poudre du carbonate mixte.

## Patentansprüche

1. Verfahren zur Herstellung eines Pulvers aus einem superlithiierten lamellaren Oxid der folgenden Formel (II) :
Li₁₊ₓ(MnₐNi_{b})₁₋ₓO₂ (II)
wobei gilt:
*x liegt in einem Bereich von 0,1 bis 0,26; und
*a+b=1, unter der Bedingung, dass a und b ungleich 0 sind;
wobei das Pulver eine spezifische Oberfläche von 1,8 bis 6 m²/g und eine Klopfdichte von größer oder gleich 1,6 g/cm³ aufweist, wobei die spezifische Oberfläche und die Klopfdichte wie in der Definition beschrieben gemessen werden,
**dadurch gekennzeichnet, dass** das Verfahren die folgenden Schritte umfasst:
a) einen Schritt der Synthese eines Mischkarbonats, welches das Element Mn, Ni umfasst;
b) einen Schritt der Reaktion des in Schritt a) erhaltenen Mischkarbonats mit einem Lithiumkarbonat durch Kalzinieren bei einer Temperatur von 800 bis 1000°C, wodurch das superlithiierte lamellare Oxid der oben genannten Formel (II) gebildet wird,
wobei die Betriebsbedingungen für die Synthese des Mischkarbonats so eingestellt werden, dass eine spezifische Oberfläche für das lamellare Oxid mit einem Wert erhalten wird, der in die oben erwähnte Bereichsdefinition fällt,
wobei der Schritt der Synthese eines Mischkarbonats die Kopräzipitation einer Lösung, welche ein Mangansulfat und ein Nickelsulfat und ein Alkalisalzkarbonat umfasst, unter Rühren in einem basischen Milieu umfasst, wobei der Schritt der Synthese eines Mischkarbonats die folgenden Vorgänge umfasst:
- einen Injektionsvorgang, bei dem in einen Wasser umfassenden Reaktor eine Lösung, umfassend ein Nickelsulfat und ein Mangansulfat (als Sulfatlösung bezeichnet) mit einer vorbestimmten Durchflussmenge injiziert wird, so dass ein Verhältnis (Durchflussmenge der Sulfatlösung/Wassermenge) in dem Reaktor 0,15 mol. h⁻¹.1⁻¹ bis 6,8 mol. h⁻¹.1⁻¹ beträgt, wobei eine vorbestimmte Rührgeschwindigkeit so eingestellt ist, dass man eine pro Volumeneinheit dissipierte Leistung im Bereich von 2,0 W/m³ bis 253,2 W/m³ bei einem vorbestimmten pH-Wert im Bereich von 7,0 bis 8,0 erhält;
- einen Vorgang des Aufrechterhaltens der Bewegung des gebildeten Präzipitats für eine zur vollständigen Bildung des Mischkarbonats geeignete Dauer;
- einen Vorgang des Isolierens des Präzipitats, gefolgt von einem Trocknungsvorgang zur Bildung eines Pulvers aus dem Mischkarbonat.

## Claims

1. A method for preparing a powder of an over-lithiated lamellar oxide of the following formula (II):
Li₁₊ₓ(MnₐNi_{b})₁₋ₓO₂ (II)
wherein:
* x is comprised in a range from 0.1 to 0.26;
* a+b=1 with the condition that a and b are different from 0;
said powder having a specific surface area ranging from 1.8 to 6 m²/g and having a tapped density greater than or equal to 1.6 g/cm³, the specific surface area and the tapped density being measured as described in the description,
said method comprising the following steps:
a) a step for synthesizing a mixed carbonate comprising the elements Mn, Ni;
b) a step for reaction of the mixed carbonate obtained in step a) with a lithium carbonate through calcination at a temperature in a range from 800 to 1,000°C, in return for which the over-lithiated lamellar oxide of the aforementioned formula (II) is formed,
the operating conditions for synthesizing the mixed carbonate being set so as to obtain a specific surface area for the lamellar oxide having a value falling under the definition of the range mentioned above,
wherein the step for synthesizing a mixed carbonate consists of co-precipitating with stirring, in a basic medium, a solution comprising a manganese sulfate and a nickel sulfate and an alkaline salt carbonate, this step for synthesizing a mixed carbonate comprising the following operations:
- an operation, in a reactor comprising water, for injecting a solution comprising a nickel sulfate and a manganese sulfate (a so called solution of sulfates) according to a predetermined flow rate so as to a ratio (flow rate of a solution of sulfates/volume of water) in the reactor is 0.15 mol.h⁻¹.l⁻¹ to 6.8 mol.h⁻¹.l⁻¹, a predetermined stirring rate set so as to obtain a dissipated power per unit volume ranging from 2.0 W/m³ to 253.2 W/m³ and at a predetermined pH ranging from 7.0 to 8.0 ;
- an operation for maintaining the stirring of the precipitate formed for a suitable period for complete formation of the mixed carbonate;
- an operation for isolating the precipitate followed by a drying operation for forming a powder of the mixed carbonate.
